# EUROPÄISCHE PATENTANMELDUNG

(11) **EP 1 122 143 A1**
(43) Veröffentlichungstag der Anmeldung: **08.08.2001**
(21) Anmeldenummer: 01100148.4
(22) Anmeldetag: 16.01.2001
(51) Int. Cl.: B60T 17/08

(54) **Deckel**

(30) Priorität: 31.01.2000 DE 10004094
(71) Anmelder: KNORR-BREMSE Systeme für Nutzfahrzeuge GmbH, 80809 München (DE)
(72) Erfinder: Kielbasa, Rudolf, 85757 Karlsfeld (DE); Helie, Bernhard, 14130 Lisieux (FR)

(57) **Zusammenfassung**

Die Erfindung schafft einen insbesondere für Bremszylinder vorgesehenen Deckel (1) mit einer Entlüftungsöffnung (3) zur Ableitung von Kondenswasser etc.. Am Deckel (1) wird hierbei im Zuge der Herstellung zunächst eine Mehrzahl an Sacklöchern (2) vorgefertigt, wobei ein Bodenstück (4) eines ausgewählten Sacklochs (2) zur Herstellung der Entlüftungsöffnung (3) abtrennbar ist. Damit wird vorteilhafterweise erreicht, daß nur die Entlüftungsöffnung (3) offen vorliegt, während die weiteren Sacklöcher (2) bestehen d.h. geschlossen bleiben. Damit vereinfacht sich die Montage des erfindungsgemäßen Deckels (1) wesentlich, da keine Öffnungen durch Pfropfen etc. verschlossen werden müssen.

## Beschreibung

Die Erfindung betrifft einen Deckel mit einer Entlüftungsöffnung, der insbesondere für einen Bremszylinder an einem Nutzfahrzeug vorgesehen ist.

In Einrichtungen wie derartigen Bremszylindern kann sich aufgrund der auftretenden Schwankungen der Umgebungsbedingungen wie der Temperatur, der Luftfeuchtigkeit, etc. Kondenswasser im Innenraum bilden. Um hier eine Schädigung der Bestandteile bzw. eine Beeinträchtigung der Funktion zu vermeiden, weisen - die aus der Praxis bekannten - Gehäusedeckel derartiger Einrichtungen üblicherweise an einer geeigneten Stelle, d.h. möglichst tief liegend, eine Entlüftungsöffnung auf. Damit ist ein Luftaustausch mit der Umgebung möglich, wodurch die Bildung von Kondenswasser besser vermieden bzw. evtl. entstandenes Kondenswasser nach außen abgeführt werden kann.

Ein Beispiel für einen Deckel mit einer Entlüftungsöffnung ist in der DE 28 09 399 B2 beschrieben, die sich mit dem Problem auseinandersetzt, einen Druckausgleich in dem ansonsten gegenüber der Umgebungsluft abgedichteten Behälterinnenraum eines Bremsflüssigkeitsbehälters für den Hauptbremszylinder einer hydraulischen Bremsanlage zu ermöglichen. Ferner offenbart die DE 197 12 209 A1 ein Hydraulikaggregat für eine hydraulische Steuer- und/oder Regelvorrichtung bei dem Hohlräume über eine Druckausgleichsöffnung be- bzw. entlüftbar sind. Das mit einem topfförmigen Deckel versehene elektrische Antriebselement ist auf einen metallischen Ventilblock nach außen hin dicht aufgesetzt. Die erforderliche Be- und Entlüftung der sich zwischen dem Gehäuse und dem Ventilblock befindenden Hohlräume erfolgt dabei meist über eine Druckausgleichsöffnung im Gehäusedeckel.

Da in der Praxis eine Vielzahl unterschiedlicher Bremssysteme verwendet wird, um allen speziellen Einbaulagen am jeweiligen Nutzfahrzeug bzw. den speziellen Leistungsanforderungen an den Bremszylinder Rechnung tragen zu können, ist eine außerordentlich große Anzahl an Deckelvarianten erforderlich, damit sichergestellt werden kann, daß die Entlüftungsöffnung immer möglichst am tiefsten Abschnitt zu liegen kommt.

In der Praxis wird dieses Problem bislang dadurch gelöst, daß eine Vielzahl an Entlüftungsöffnungen in einem Deckel vorausgebildet ist. Die nicht zur Entlüftung benötigten Öffnungen werden dann durch Kunststoffpfropfen verschlossen, um ein unerwünschtes Eindringen von Schmutz, Spritzwasser, etc. zu vermeiden.

Diese Bauweise weist jedoch den Nachteil auf, daß hierzu zusätzliche Elemente, nämlich die Kunststoffpfropfen erforderlich sind. Zudem müssen bei z.B. sechs vorgefertigten Entlüftungsöffnungen üblicherweise fünf verschlossen werden, so daß fünf Montageschritte zur Einbringung der jeweiligen Kunststoffpfropfen erforderlich sind. Dies erhöht den Aufwand bei der Montage erheblich.

Ein weiterer Nachteil dieser Ausgestaltungsweise liegt darin, daß derartige Kunststoffpfropfen im Laufe der Jahre altern und durch die hieraus bedingten Eigenschaftsveränderungen, und/oder aufgrund von anderen äußeren Einflüssen verloren gehen können, wodurch die Abdichtwirkung dann nicht mehr gegeben ist. Da der Verschluß der nicht benötigten Öffnungen in der Praxis üblicherweise kaum kontrolliert wird, kann somit auf Dauer nicht ausgeschlossen werden, daß dennoch Schmutz, Wasser, etc. in den Bremszylinder eindringen.

Der Erfindung liegt daher die Aufgabe zugrunde, einen Deckel mit einer Entlüftungsöffnung derart weiter zu bilden, daß er mit geringerem Montageaufwand eine Anpassung an die jeweilige Einbaulage zuläßt.

Diese Aufgabe wird erfindungsgemäß durch eine Weiterbildung eines Deckels mit einer Entlüftungsöffnung in der Art gelöst, daß am Deckel eine Mehrzahl von Sacklöchern ausgebildet ist, und daß ein Bodenstück eines ausgewählten Sacklochs zur Herstellung der Entlüftungsöffnung entfernbar ist.

Erfindungsgemäß wurde hierbei erkannt, daß es von besonderem Vorteil ist, wenn nicht alle Öffnungen vorab geöffnet werden, sondern eine gezielte Auswahl der tatsächlich benötigten Entlüftungsöffnung vorgenommen wird. Im Vergleich zum Stand der Technik, bei dem eine Mehrzahl von Entlüftungsöffnungen nachträglich verschlossen werden muß, reduziert sich die Anzahl der Montageschritte somit erfindungsgemäß wesentlich auf das tatsächlich erforderliche Maß.

Dabei ist es jedoch erfindungsgemäß weiterhin möglich, an beliebig vielen Stellen Vorkehrung zur Herstellung eines Durchgangslochs für die Entlüftung vorzunehmen, weshalb keinerlei Abstriche gegenüber dem Stand der Technik hinsichtlich der möglichen Vielfalt an Einbauvarianten erforderlich sind, die alle mit einem und demselben Deckel bedient werden können.

Von weiterem Vorteil ist es im Rahmen der Erfindung, daß fehlerhafte Abdichtungen durch verloren gegangene oder bei der Montage vergessene Kunststoffpfropfen zuverlässig vermieden werden, da die im Deckel verbleibenden Bodenstücke verlustsicher mit dem Deckel verbunden sind. Dies wirkt sich vorteilhaft auf die Lebensdauer des zu entlüftenden Gegenstands wie z. B. des Bremszylinders aus.

Darüber hinaus kann durch die erfindungsgemäße Maßnahme die Anzahl an unterschiedlichen Materialien in der Anordnung reduziert werden, wodurch sich auch der Aufwand beim Recycling verringert.

Von weiterem Vorteil ist es, daß sich durch die erfindungsgemäße Maßnahme ein einheitliches Erscheinungsbild des Deckels ergibt, d.h. keine visuell störenden Kunststoffpfropfen am Deckel vorliegen.

Die Entfernung des Bodenstücks am ausgewählten Sackloch kann dabei ab dem Zeitpunkt erfolgen, ab dem die Einbaulage der Anordnung bekannt ist. Bei vorbestimmten Baureihen kann dies bereits im Zuge der Montage des Deckels z. B. auf den Bremszylinder erfolgen. Wird die gesamte Anordnung als Ersatzteil unmittelbar an einen Kunden abgegeben, der den Einbau selbst vornimmt, kann dieser das Öffnen der Entlüftungsöffnung ohne weiteres auch nach dem Einbau direkt vor Ort durchführen.

Vorteilhafte Weiterbildungen der Erfindung ergeben sich aus den Merkmalen der Unteransprüche.

So können die Bodenstücke der Sacklöcher auch nach außen über die Außenfläche des Deckels überstehen. Dies hat den Vorteil, daß die Bodenstücke beispielsweise durch eine Zange oder ähnliches ergriffen werden können, wodurch ein einfaches Abtrennen bzw. Entfernen möglich ist. Hierzu ist vorteilhafterweise kein Sonderwerkzeug erforderlich und dieser Arbeitsschritt läßt sich ohne große Mühen in sehr kurzer Zeit durchführen.

Weiter hat es sich als vorteilhaft erwiesen, wenn die Sacklöcher eingeprägt sind. Dann ist das Bodenstück weiterhin über einen Materialsteg mit dem Deckel verbunden, wodurch eine zuverlässige Anbindung gegeben ist. Darüber hinaus läßt sich durch das Prägeverfahren sehr exakt voraus bestimmen, welcher Krafteintrag erforderlich ist, um das Bodenstück vom Deckel abzutrennen. Somit eignet sich das Prägeverfahren sehr gut, um einerseits einen zuverlässigen Halt des Bodenstücks am Deckel zu realisieren, wie er für die nicht verwendeten Sacklöcher auf Dauer von Bedeutung ist, und andererseits ein Abtrennen des ausgewählten Bodenstücks mit geringer Kraft zuzulassen, um die Entlüftungsöffnung auszubilden.

Alternativ ist es auch möglich, daß die Sacklöcher eingestanzt sind, d.h. nur bis zu einem begrenzten Maß durch das Material des Deckels hindurch gestanzt sind. Damit ergibt sich eine Verpressung, mittels der ein Teilbereich des Bodenstücks am Deckel festgelegt ist. Das Stanzverfahren zeichnet sich hierbei durch einen geringeren verfahrenstechnischen Aufwand aus. Ferner ist bei dieser Ausgestaltungsweise die zum Entfernen des Bodenstücks erforderliche Kraft üblicherweise geringer als beim Prägeverfahren, da der Materialverbund zwischen Bodenstück und Deckel im wesentlichen aufgehoben ist.

Wenn der Deckel zudem wenigstens außenseitig mit einer Beschichtung versehen ist, kann neben dem damit an sich verbundenen Zweck als Korrosionsschutz etc. erreicht werden, daß z.B. bei der Herstellung der Sacklöcher evtl. entstandene Haarrisse im Bereich der Sacklöcher geschlossen werden. Darüber hinaus stabilisiert eine derartige Beschichtung das Bodenstück am Deckel, was insbesondere bei einer Herstellung im Stanzverfahren von Vorteil ist, da hier der Materialverbund zwischen Bodenstück und Deckel im wesentlichen aufgehoben ist. Die Beschichtung erhöht daher die Sicherheit gegen einen unerwünschten Verlust eines Bodenstücks.

Die Erfindung wird nachfolgend in Ausführungsbeispielen anhand der Figuren der Zeichnung näher erläutert. Es zeigt:
Fig. 1 eine Draufsicht auf einen erfindungsgemäßen Deckel;
Fig. 2 eine Detaildarstellung eines geprägten Sacklochs;
Fig. 3 eine Detaildarstellung eines eingestanzten Sacklochs; und
Fig. 4 eine Detaildarstellung, welche das Abtrennen eines Bodenstücks vom Deckel zeigt.

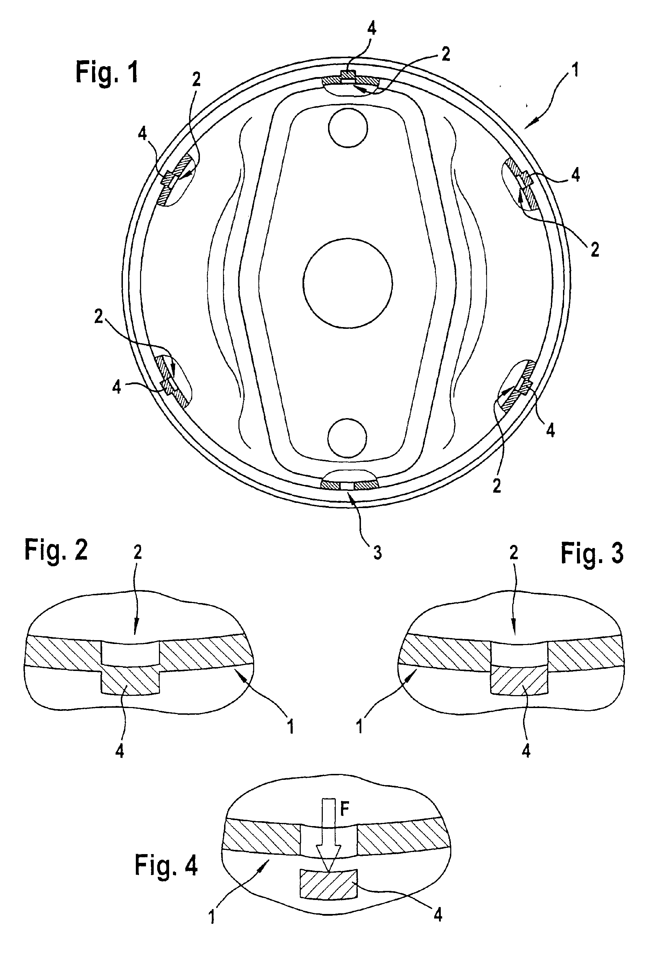

In Fig. 1 ist eine Draufsicht auf einen Deckel 1 gezeigt, wie er z.B. an einem Bremszylinder angeordnet ist. Gemäß der Darstellung in dieser Figur weist der Deckel 1 fünf Sacklöcher 2 und eine Entlüftungsöffnung 3 auf. Die Sacklöcher 2 bzw. die Entlüftungsöffnung 3 sind hierbei gleichmäßig beabstandet am Umfang des Deckels 1 angeordnet.

Fig. 1 stellt daher bereits den Deckel 1 in der Einbaulage dar, wobei die Sacklöcher 2 weiter über ein Bodenstück 4 verfügen, während dieses bei der Entlüftungsöffnung 3 im Zuge der Montage entfernt wurde. Die Sacklöcher 2 sind somit weiterhin dicht verschlossen, so daß das Eindringen von Feuchtigkeit, Schmutz etc. wirksam vermieden wird. Nur die Entlüftungsöffnung 3, welche in Einbaulage am tiefsten Punkt des Deckels 1 zu liegen kommt, ist offen, damit eine Belüftung des Innenraums möglich ist und Kondenswasser ggf. abfließen kann.

In Fig. 2 ist in näherem Detail ein Beispiel für ein geprägtes Sackloch 2 dargestellt. Aus dieser Figur wird deutlich, daß das Bodenstück 4 weiterhin über einen schmalen Steg mit dem Material des Deckels 1 verbunden ist. Dieser Materialsteg dient als Sollbruchstelle, sofern das Bodenstück 4 abgetrennt werden soll. Die hierfür erforderliche Kraft kann durch die Bemessung der Stegbreite unter Berücksichtigung der Materialeigenschaften ohne weiteres voreingestellt werden.

Fig. 3 zeigt im Detail ein Beispiel eines Sacklochs 2 mit eingestanztem Bodenstück 4. Hier wird das Bodenstück 4 durch die im Zuge des Stanzvorgangs auftretende Verpressung am Deckel 1 gehalten. Das Maß der Überlappung des Bodenstücks 4 mit der Materialdicke des Deckels 1 wird durch den Stanzvorgang bestimmt und eingestellt, so daß auch die zum Ablösen des Bodenstücks 4 erforderliche Kraft voreinstellbar ist.

Wie aus Fig. 4 erkennbar ist, wird zum Ablösen des Bodenstücks 4 vorzugsweise eine in Richtung des Pfeiles F gerichtete Kraftkomponente auf das Bodenstück 4 aufgebracht. Das Bodenstück 4 wird folglich nach außen abgetrennt. Die hierfür erforderliche Kraft kann entweder bei vorbestimmter Lage der Entlüftungsöffnung 3 vor Montage des Deckels 1 von innen her aufgebracht werden, oder es ist nach erfolgter Montage auch möglich, das überstehende Bodenstück 4 durch eine Zange etc. von außen zu ergreifen und nach außen wegzuziehen.

Der mit den Sacklöchern 2 versehene Deckel 1 kann zudem allen üblichen weiteren Bearbeitungen wie Oberflächenbehandlungen, Schweißverarbeitungen, etc. unterzogen werden. Eventuell kann nach dem Abziehen des Bodenstücks 4 eine Nachbehandlung an der Entlüftungsöffnung 3 vorgenommen werden, um eine mögliche Korrosion insbesondere im Bereich des zuvor vorhandenen Stegs zwischen dem Bodenstück 4 und dem Deckel 1 zu vermeiden.

Die Erfindung läßt neben den hier aufgezeigten Ausführungsformen weitere Gestaltungsansätze zu.

So ist die Anzahl der vorgefertigten Sacklöcher 2 nicht auf die hier dargestellten sechs Stück beschränkt. Sie kann je nach Anwendungsfall variiert werden. Dabei wird sie so gewählt, daß eine Vielzahl von Bauvarianten abgedeckt ist, wodurch sich die Anzahl an unterschiedlichen Deckelbauweisen für eine Produktgruppe wesentlich reduzieren läßt. Im Regelfalle sind zwischen zwei und acht Sacklöcher vorgesehen, wobei diese auch ungleichmäßig am Deckel verteilt sein können.

Der erfindungsgemäße Deckel 1 kann zudem ferner auch an beliebigen anderen Anordnungen als einem Bremszylinder angewendet werden, sofern eine Entlüftungsöffnung vorgesehen ist. Ferner ist es auch möglich, z.B. das der Entlüftungsöffnung 3 gegenüber liegende Loch ebenfalls zu öffnen, um beispielsweise einen Lufteintritt an der höchsten Stelle der Anordnung zu ermöglichen.

Das Bodenstück kann zudem ferner auch so ausgebildet sein, daß es im Verhältnis zur Materialstärke des Deckels 1 ein geringeres Dickenmaß aufweist. Daher ist es auch möglich, das Bodenstück so zu gestalten, daß es nicht über den Außenumfang des Deckels 1 übersteht, sondern lediglich eine "Materialschwachstelle" darstellt, welche mit relativ geringer Kraft durchbrochen werden kann. Hierbei ist es zudem auch möglich, das Bodenstück im Bereich der Innenfläche des Deckels 1 vorzusehen. Überdies kann das Bodenstück auch in den Innenraum des Deckels 1 hinein gedrückt werden, falls dort keine Beeinträchtigung der Funktion der im Deckel 1 angeordneten Komponenten zu erwarten ist.

Dies verdeutlicht, daß die Sacklöcher 2 auch auf andere Weise als durch Prägung oder Stanzen hergestellt sein können. So ist z.B. auch ein Bohr- bzw. Fräsvorgang oder eine andere Abtrenn- bzw. Verformweise möglich, um diese vordimensionierten, räumlich klar begrenzten "Materialschwächungen" im Deckel 1 auszubilden.

Die Erfindung schafft somit einen insbesondere für Bremszylinder vorgesehenen Deckel 1 mit einer Entlüftungsöffnung 3 zur Ableitung von Kondenswasser etc.. Am Deckel 1 wird hierbei im Zuge der Herstellung zunächst eine Mehrzahl an Sacklöchern 2 vorgefertigt, wobei ein Bodenstück 4 eines ausgewählten Sacklochs 2 zur Herstellung der Entlüftungsöffnung 3 abtrennbar ist. Damit wird vorteilhafterweise erreicht, daß nur die Entlüftungsöffnung 3 offen vorliegt, während die weiteren Sacklöcher 2 bestehen d.h. geschlossen bleiben. Damit vereinfacht sich die Montage des erfindungsgemäßen Deckels 1 wesentlich, da keine Öffnungen durch Pfropfen etc. verschlossen werden müssen.

## Patentansprüche

1. Deckel (1), insbesondere für einen Bremszylinder an einem Nutzfahrzeug, mit einer Entlüftungsöffnung (3), dadurch gekennzeichnet, daß am Deckel (1) eine Mehrzahl von Sacklöchern (2) vorausgebildet ist, und daß ein Bodenstück (4) eines ausgewählten Sacklochs (2) zur Herstellung der Entlüftungsöffnung (3) entfernbar ist.

2. Deckel nach Anspruch 1, dadurch gekennzeichnet, daß die Bodenstücke (4) der Sacklöcher (2) nach außen über die Außenfläche des Deckels (1) überstehen.

3. Deckel nach Anspruch 1 oder 2, dadurch gekennzeichnet, daß die Sacklöcher (2) eingeprägt sind.

4. Deckel nach Anspruch 1 oder 2, dadurch gekennzeichnet, daß die Sacklöcher (2) eingestanzt sind.

5. Deckel nach einem der Ansprüche 1 bis 4, dadurch gekennzeichnet, daß er wenigstens außenseitig mit einer Beschichtung versehen ist.
